# EUROPÄISCHE PATENTSCHRIFT

(11) **EP 2 891 764 B1**
(45) Veröffentlichungstag und Bekanntmachung des Hinweises auf die Patenterteilung: **28.09.2016**
(21) Anmeldenummer: 14197201.8
(22) Anmeldetag: 10.12.2014
(51) Int. Cl.: F01C 21/02, F04B 1/00, F16C 19/54

(54) **Verdrängerpumpe und Verfahren zum Lagern eines Verdrängers einer Verdrängerpumpe bezüglich eines Gehäuses**
Displacement pump and method for supporting a displacer of a displacement pump relative to a housing
Pompe volumétrique et procédé destiné à supporter une soufflante de pompe volumétrique par rapport à un boîtier

(30) Priorität: 10.12.2013 DE 102013225327
(43) Veröffentlichungstag der Anmeldung: 08.07.2015
(73) Patentinhaber: Aktiebolaget SKF, 415 50 Göteborg (SE)
(72) Erfinder: de Rooster, Tom, 2811 Leest - Mechelen (BE); Gruell, Robert, 97528 Sulzdorf (DE)
(74) Vertreter: Kuhstrebe, Jochen

(56) Entgegenhaltungen:
- EP-A1- 1 845 265
- DE-U1- 9 015 876
- JP-A- H06 129 371
- US-A- 5 409 359

## Beschreibung

Die nachfolgende Erfindung liegt auf dem Gebiet der Lagerung eines Verdrängers einer Verdrängerpumpe bezüglich eines Gehäuses.

Eine solche Lagerung wird in der Druckschrift EP 1 845 265 A1 offenbart.

In vielen Bereichen der Technik, beispielsweise bei Fahrzeugen oder im Energiebereich, kommen Pumpen zum Einsatz. Speziell können für einige Anwendungen Verdrängerpumpen verwendet werden, etwa wenn ein Zurückströmen eines Mediums verhindert werden soll. Beispielsweise bei Schraubenspindelpumpen kann es hierbei erforderlich sein, einen Verdränger auf einer Achse derart zu montieren, dass ein Spielraum des Verdrängers zu einem Gehäuse der Pumpe in einem sehr kleinen Toleranzbereich liegt. Dadurch kann eine hohe Abdichtung der Pumpe erzielt werden. Die Achse kann hierzu mittels einem Axialkugellager und einem Zylinderrollenlager befestigt sein. Um den Toleranzbereich bei der Montage herstellerseitig möglichst klein zu halten, kann es bei konventionellen Lageranordnungen jedoch nötig sein, die beiden Lager möglichst passgenau aufeinander anzufertigen, mit laufenden Nummern zu versehen und zu katalogisieren. Dies kann bereits einen erhöhten Produktionsaufwand und damit einhergehende Kosten erfordern.

Die individuell aufeinander angepassten Lager können ein gemeinsames System bilden, was auch verbraucherseitig zu Problemen führen kann. So können die beiden Lager unter Umständen nicht mehr einzeln austauschbar sein. Wird beispielsweise durch Verschleiß oder einen auftretenden Schaden ein Austausch eines der beiden Lager erforderlich, kann durch die individuelle Anpassung auch ein Austausch des zweiten Lagers notwendig sein, was verbraucherseitig zu höheren Kosten führen kann.

Es ist daher wünschenswert, einen Kompromiss aus Produktionsaufwand, Passgenauigkeit und Austauschbarkeit zu verbessern.

Diesen Anforderungen tragen eine Lageranordnung gemäß dem unabhängigen Patentanspruch 1 und ein Verfahren zum Lagern eines Verdrängers einer Verdrängerpumpe bezüglich eines Gehäuses gemäß dem unabhängigen Patentanspruch 8 Rechnung.

Ausführungsbeispiele beziehen sich auf eine Verdrängerpumpe, umfassend ein Gehäuse, einen Verdränger und eine Lageranordnung zum Lagern desVerdrängers derVerdrängerpumpe bezüglich desGehäuses. Die Lageranordnung umfasst ein erstes Lager zum Übertragen einer Kraft in einer axialen Richtung. Die Lageranordnung umfasst außerdem ein in der axialen Richtung zwischen dem ersten Lager und dem Gehäuse angeordnetes zweites Lager zum Übertragen einer Kraft in einer radialen Richtung. Dabei ist ein erster Lagerring des ersten Lagers mit einer mit dem Verdränger verbundenen Welle verbunden. Dadurch ist ein maximaler axialer erster Abstand zwischen dem ersten Lagerring des ersten Lagers und dem Verdränger festgelegt. Ein zweiter Lagerring des ersten Lagers ist außerdem axial gegen einen ersten Lagerring des zweiten Lagers, und der erste Lagerring des zweiten Lagers axial gegen das Gehäuse abgestützt. Dadurch ist ein axialer zweiter Abstand zwischen dem ersten Lagerring des ersten Lagers und dem Gehäuse festgelegt. Eine Differenz des ersten Abstandes und des zweiten Abstandes ist dabei durch ein Distanzstück zwischen dem ersten und dem zweiten Lager vorgegeben. Ein Radius einer Lauffläche des zweiten Lagerrings des zweiten Lagers ist mindestens so groß wie ein der Lauffläche zugewandter Außenradius des Distanzstücks, und der der Lauffläche zugewandte Außenradius des Distanzstücks ist größer als ein der Lauffläche abgewandter Außenradius des Distanzstücks. Hierdurch können Lager in standardmäßigen Baugrößen verwendet werden, da eine Anpassung lediglich des Distanzstücks bereits genügen kann, um einen Abstand zwischen Verdränger und Gehäuse innerhalb einer vorgegebenen Toleranz zu treffen. Ein möglicherweise komplizierter Anpassungsprozess des ersten und zweiten Lagers aneinander kann hierdurch entfallen. Ein Verbraucher kann anstelle von individuell angepassten Lagern beispielsweise serienmäßig gefertigte Lager verwenden, was anfallende Kosten reduzieren kann. Ferner kann eine Montage für den Verbraucher weniger Aufwand verursachen, und eventuell erforderliche Reparaturen erleichtert werden. Damit kann zudem eine Montage der Lageranordnung erleichtert werden. Anders ausgedrückt kann ein Verkanten bei einem Einbringen der Welle mit dem Distanzstück und dem zweiten Lagerring des zweiten Lagers an den ersten Lagerring des ersten Lagers mit den Wälzkörpern möglicherweise vermieden werden. Ein Austausch einzelner defekter Lager kann ferner somit ermöglicht werden, oder bei einigen weiteren Ausführungsbeispielen Bauraum eingespart werden.

Bei einigen Ausführungsbeispielen sind der erste Lagerring des ersten Lagers ferner axial gegen einen zweiten Lagerring des zweiten Lagers, der zweite Lagerring des zweiten Lagers axial gegen einen Abstandshalter und der Abstandshalter axial gegen den Verdränger abgestützt. Hierdurch kann eine Abstützung bei einem Wirken axialer Kräfte erfolgen, bei der der Abstand zwischen Verdränger und dem ersten Lagerring des ersten Lagers unverändert bleibt.

Bei manchen Ausführungsbeispielen sind der erste Lagerring des ersten Lagers ferner axial gegen das Distanzstück, und das Distanzstück axial gegen einen zweiten Lagerring des zweiten Lagers abgestützt. Das Distanzstück und der zweite Lagerring des zweiten Lagers stehen dabei mit der Welle in Anlage. So kann durch Wahl einer axialen Länge des Distanzstücks ein Abstand des ersten Lagerrings des ersten Lagers zu dem Verdränger einstellbar sein.

Bei manchen Ausführungsbeispielen sind der zweite Lagerring des ersten Lagers ferner axial gegen das Distanzstück, und das Distanzstück axial gegen den ersten Lagerring des zweiten Lagers abgestützt. Das Distanzstück und der erste Lagerring des zweiten Lagers stehen dabei mit dem Gehäuse in Anlage. So kann durch Wahl einer axialen Länge des Distanzstücks ein Abstand des ersten Lagerrings des ersten Lagers zu dem Gehäuse einstellbar sein.

Bei einigen Ausführungsbeispielen ist der erste Lagerring des ersten Lagers ferner axial gegen einen weiteren Abstandshalter, und axial gegen einen zweiten Lagerring des zweiten Lagers abgestützt. Der weitere Abstandshalter und der zweite Lagerring des zweiten Lagers stehen dabei mit der Welle in Anlage. Hierdurch kann ein Mindestabstand des Verdrängers zu dem ersten Lagerring des ersten Lagers gewählt werden.

Bei manchen Ausführungsbeispielen ist eine axiale Ausdehnung eines zweiten Lagerrings des zweiten Lagers größer als eine Summe aus einer axialen Ausdehnung des ersten Lagerrings des zweiten Lagers und einer axialen Ausdehnung des Distanzstücks. So kann ein Mindestabstand zwischen dem Gehäuse und dem Verdränger vorgegeben werden.

Bei einigen Ausführungsbeispielen sind das erste Lager ein Schrägkugellager und das zweite Lager ein Zylinderrollenlager. Damit kann eine gute Aufnahme axial und radial wirkender Kräfte erfolgen, und demzufolge eine Dejustierung möglicherweise vermieden werden.

Ausführungsbeispiele beziehen sich ferner auf ein Verfahren zum Lagern eines Verdrängers einer Verdrängerpumpe bezüglich eines Gehäuses. Das Verfahren umfasst ein Übertragen einer Kraft in einer axialen Richtung durch ein erstes Lager. Außerdem umfasst das Verfahren ein Übertragen einer Kraft in einer radialen Richtung durch ein in der axialen Richtung zwischen dem ersten Lager und dem Gehäuse angeordnetes zweites Lager. Weiterhin umfasst das Verfahren ein Verbinden eines ersten Lagerrings des ersten Lagers mit einer mit dem Verdränger verbundenen Welle. Dies geschieht derart, dass ein axialer erster Abstand zwischen dem ersten Lagerring des ersten Lagers und dem Verdränger festgelegt ist. Dem folgt ein Abstützen des zweiten Lagerrings des ersten Lagers axial gegen einen ersten Lagerring des zweiten Lagers und des ersten Lagerrings des zweiten Lagers axial gegen das Gehäuse. Dies geschieht derart, dass ein axialer zweiter Abstand zwischen dem ersten Lagerring des ersten Lagers und dem Gehäuse festgelegt ist. Es folgt dem wiederum ein Vorgeben einer Differenz des ersten Abstandes und des zweiten Abstandes durch ein Distanzstück zwischen dem ersten und dem zweiten Lager.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben. Es zeigen im Einzelnen:
Fig. 1 eine Lageranordnung zum Lagern eines Verdrängers einer Verdrängerpumpe bezüglich eines Gehäuses gemäß einem Ausführungsbeispiel;
Fig. 2 eine weitere Lageranordnung gemäß einem Ausführungsbeispiel;
Fig. 3 eine noch weitere Lageranordnung gemäß einem Ausführungsbeispiel; und
Fig. 4 ein Flussdiagramm eines Verfahrens zum Lagern eines Verdrängers einer Verdrängerpumpe bezüglich eines Gehäuses gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Konventionell kann ein Axialspiel bei einer Anordnung aus einem Axial- und einem Radiallager dadurch festgelegt werden, indem die Gesamtbreite beider Lager unter Berücksichtigung des Axialspiels gemessen wird. Ein innerer Ring des Radiallagers kann dann entfernt, entsprechend an einer radial verlaufenden Seitenfläche abgeschliffen und wieder montiert werden. Die Lager können markiert und als zusammengehöriger Bausatz abgepackt werden. Durch Entpacken, Reinigen, Abschleifen oder Einlagern der einzelnen Lager können zusätzliche Verfahrensschritte anfallen, wodurch Herstellungskosten erhöht oder ein Austausch eines einzelnen Lagers erschwert oder sogar verhindert werden können.

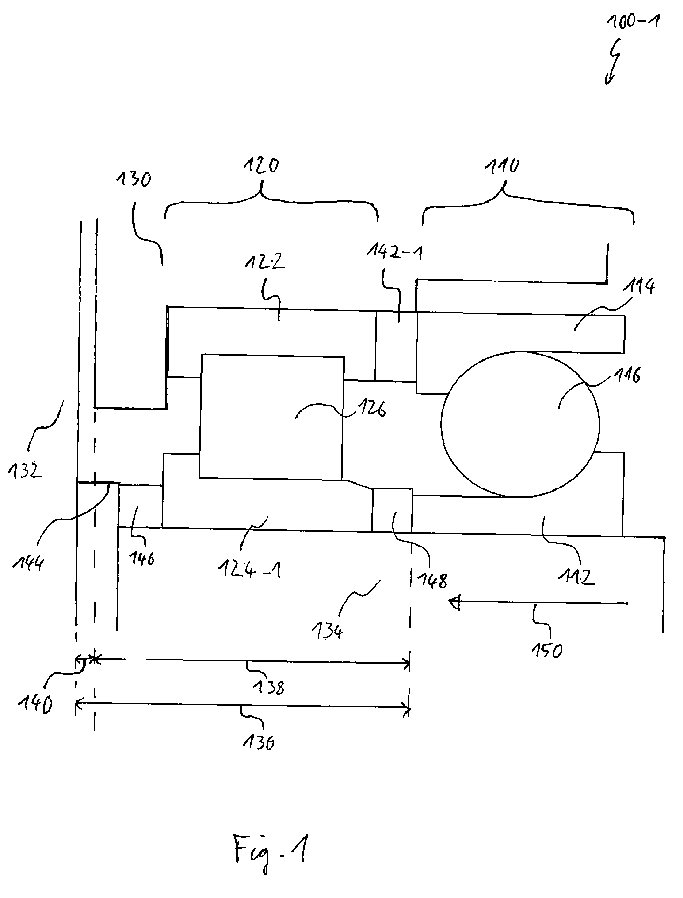

Ausführungsbeispiele schaffen eine Lageranordnung zum Lagern eines Verdrängers einer Verdrängerpumpe bezüglich eines Gehäuses. Fig. 1 zeigt ein Ausführungsbeispiel einer solchen Lageranordnung 100-1. Die Lageranordnung 100-1 umfasst ein erstes Lager 110 zum Übertragen einer Kraft in einer axialen Richtung. Die Lageranordnung 100-1 umfasst außerdem ein in der axialen Richtung zwischen dem ersten Lager 110 und dem Gehäuse 130 angeordnetes zweites Lager 120 zum Übertragen einer Kraft in einer radialen Richtung. Dabei ist ein erster Lagerring 112 des ersten Lagers 110 mit einer mit dem Verdränger 132 verbundenen Welle 134 verbunden. Dadurch ist ein maximaler axialer erster Abstand 136 zwischen dem ersten Lagerring 112 des ersten Lagers 110 und dem Verdränger 132 festgelegt. Ein zweiter Lagerring 114 des ersten Lagers 110 ist außerdem axial gegen einen ersten Lagerring 122 des zweiten Lagers 120, und der erste Lagerring 122 des zweiten Lagers 120 axial gegen das Gehäuse 130 abgestützt. Dadurch ist ein axialer zweiter Abstand 138 zwischen dem ersten Lagerring 112 des ersten Lagers 110 und dem Gehäuse 130 festgelegt. Eine Differenz 140 des ersten Abstandes 136 und des zweiten Abstandes 138 ist dabei durch ein Distanzstück 142-1 zwischen dem ersten 110 und dem zweiten Lager 120 vorgegeben.

Die Verdrängerpumpe kann beispielsweise auch als Verdichter oder Kompressor ausgebildet sein. Das erste Lager 110 ist in Fig. 1 beispielhaft als einfaches Schrägkugellager mit kugelförmigem Wälzkörper 116 dargestellt, kann aber in weiteren Ausführungsbeispielen auch mehrreihig oder als anderes Axiallager ausgebildet sein, z.B. als Kegelrollen- oder Kreuzrollenlager. Das erste Lager 110 wird im Folgenden beispielhaft als Axiallager 110 bezeichnet. Der erste Lagerring 112 und der zweite Lagerring 114 können jeweils ein Innen- oder Außenring des Axiallagers 110 sein. In Fig. 1 ist der erste Lagerring 112 in axialer Richtung innen gelegen und wird nachfolgend als Axiallagerinnenring 112 bezeichnet. Entsprechend wird der in Fig. 1 axial außen liegende zweite Lagerring 114 als Axiallager-Außenring 114 bezeichnet.

Das zweite Lager 120 ist in Fig. 1 beispielhaft als einfaches zylindrisches Rollenlager mit zylinderförmigem Wälzkörper 126 dargestellt, kann aber in weiteren Ausführungsbeispielen auch mehrreihig oder als anderes Radiallager ausgebildet sein, z.B. als Rillenkugel- oder Nadellager. Das zweite Lager 120 wird im Folgenden beispielhaft als Radiallager 120 bezeichnet. Der erste Lagerring 122 und der zweite Lagerring 124-1 können jeweils ein Innen- oder Außenring des Radiallagers 120 sein. In Fig. 1 ist der erste Lagerring 122 in axialer Richtung außen gelegen und wird nachfolgend als Radiallageraußenring 122 bezeichnet. Entsprechend wird der in Fig. 1 axial innen liegende zweite Lagerring 124-1 als Radiallagerinnenring 124-1 bezeichnet.

Zur besseren Veranschaulichung, jedoch keinesfalls einschränkend, wird der erste Abstand 136 im Folgenden als Verdrängerabstand 136, und der zweite Abstand 138 als Gehäuseabstand 138 bezeichnet.

Verbindungen zwischen den einzelnen Komponenten können form-, kraft- oder stoffschlüssig sein. Das Distanzstück 142-1 kann beispielsweise wenigstens zu einem Teil aus einem metallischen Werkstoff oder einem Kunststoff, einstückig oder mehrstückig gefertigt, und beispielsweise ring-, scheiben-, ringsegment- oder scheibensegmentförmig sein.

Das Vorgeben der Differenz 140, nachfolgend als Axialspiel 140 bezeichnet, kann dabei prinzipiell durch mehrere Varianten erreicht werden, von denen hier einige beispielhaft vorgestellt sind. Das in Fig. 1 dargestellte, erste Ausführungsbeispiel zeigt eine Variante, bei der das Distanzstück 142-1 zwischen dem Axiallageraußenring 114 und dem Radiallageraußenring 122 eingebracht ist.

Die Lageranordnung 100-1 in Fig. 1 ist von einer Verdrängerpumpe mit einem Verdränger 132 und einem Gehäuse 130 umfasst. Zunächst weist der Verdränger 132 einen radialen Einzug 144 auf, gegen den ein auf der Welle 134 montierter Abstandshalter 146 in axialer Richtung abgestützt ist. Hierbei bedeutet "in axialer Richtung abgestützt", dass eine Fläche einer Komponente mit einer Fläche der anderen Komponente derart in Anlage steht, dass eine Kraft in axialer Richtung über beide Flächen übertragbar ist. In einigen Ausführungsbeispielen steht die Kraftrichtung orthogonal auf den Flächen, in anderen Ausführungsbeispielen kann sie jedoch um bis zu 10° oder 45° von einer Flächennormalen abweichen. Vereinfachend wird im Nachfolgenden der Begriff "abgestützt" als gleichbedeutend mit "axial abgestützt" verstanden, sofern keine andere Auslegungsmöglichkeit (etwa "radial abgestützt") explizit genannt wird.

Der Abstandshalter 146 ist gegen den Radiallagerinnenring 124-1 abgestützt, gegen den sich wiederum ein weiterer Abstandshalter 148 abstützt. Der Axiallagerinnenring 112 ist gegen den weiteren Abstandshalter 148 abgestützt. Entlang der axialen Richtung kann sich so eine Kraftübertragung, in dieser oder umgekehrter Reihenfolge, von dem Axiallagerinnenring 112 über den weiteren Abstandshalter 148, den Radiallagerinnenring 124-1, den Abstandshalter 146 und den Einzug 144 auf den Verdränger ergeben. Anders ausgedrückt kann so ein minimaler Verdrängerabstand 136 im Wesentlichen vorgegeben werden. "Im Wesentlichen" bedeutet, dass der Verdrängerabstand 136 z.B. durch Fertigungstoleranzen oder Elastizitäten verwendeter Werkstoffe auch noch weiter nach unten abweichen kann. Es kann beispielsweise nach Abstützung der genannten Komponenten gegeneinander der Axiallagerinnenring 112 mit der Welle 134 fest verbunden werden, um den Verdrängerabstand 136 zu fixieren. Der Abstandshalter 146 und der weitere Abstandshalter 148 können dabei eine vordefinierte axiale Breite aufweisen. Der Verdrängerabstand 136 kann zumindest teilweise durch die axiale Breite des Abstandshalters 146 oder des weiteren Abstandshalters 148 bestimmt werden. Ferner kann eine Position des Radiallagerinnenrings 124-1 gegenüber dem Verdränger 132 durch den Abstandshalter 146 festgelegt werden.

Durch den Abstandshalter 146 oder den weiteren Abstandshalter 148 kann nun ein Zwischenraum für das Distanzstück 142-1 zwischen dem Axiallageraußenring 114 und dem Radiallageraußenring 122 geschaffen werden. Nach Einbringen des Distanzstücks 142-1 kann das Axiallager 110 mit dem Axiallageraußenring 114 über das Distanzstück 142-1 und den Radiallageraußenring 122 gegen das Gehäuse 130 abgestützt werden. Dabei kann der zylindrische Wälzkörper auf dem Radiallagerinnenring 124-1 oder dem Radiallageraußenring 122 axial verschiebbar sein. Somit kann ein minimaler Gehäuseabstand 138 im Wesentlichen vorgegeben werden. Der Gehäuseabstand 138 kann beispielsweise durch Ausüben einer axialen Kraft 150 in Richtung des Verdrängers fixiert werden.

Sind Verdrängerabstand 136 und Gehäuseabstand 138 fixiert, kann dadurch auch das Axialspiel 140 vorgegeben werden. Zur Festlegung eines definierten Axialspiels 140 kann beispielsweise ein Abstand zwischen dem Axiallageraußenring 114 und dem Radiallageraußenring 122 gemessen, und das Distanzstück 142-1 individuell eingepasst werden. Hierdurch kann es möglich sein, serienmäßige Axiallager 110 und Radiallager 120 zu verwenden, wobei eine individuelle Anpassung der Lager 110; 120 selber entfallen kann. Dadurch kann sich auch ein Austausch- oder Wartungsprozess an einem der Lager vereinfachen sowie Produktionsaufwand und -kosten reduzieren.

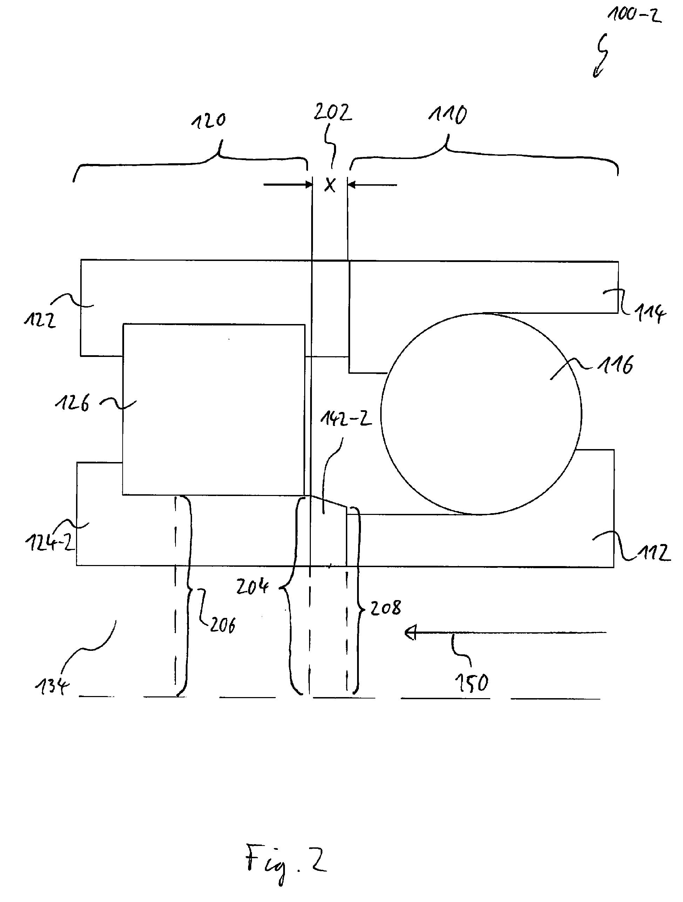

Fig. 2 zeigt ein zweites Ausführungsbeispiel zur Veranschaulichung einer weiteren Variante einer Lageranordnung 100-2. Die gezeigten Komponenten entsprechen im Wesentlichen denen in Fig. 1. Im Unterschied zu der vorangegangenen Variante ist hier das Distanzstück 142-1 zwischen dem Axiallageraußenring 114 und dem Radiallageraußenring 122 eingebracht. Der Gehäuseabstand ist bei Fig. 2 dadurch vorgegeben, dass unter Wirkung einer axialen Kraft 150 in Richtung des Verdrängers der Axiallagerinnenring 112 über den kugelförmigen Wälzkörper 116, den Axiallageraußenring 114 und den Radiallageraußenring 122 gegen das Gehäuse abgestützt sein. Mit anderen Worten kann die Abstützung gegen das Gehäuse wie in Fig. 1 erfolgen, mit dem Unterschied, dass der Axiallageraußenring 114 unmittelbar mit dem Radiallageraußenring 122 in Anlage steht.

Zur Vorgabe des Verdrängerabstands erfolgt in Fig. 2 eine Abstützung des Axiallagerinnenrings 114 über das Distanzstück 142-2, den Radiallagerinnenring 124-2 und einen Abstandshalter gegen den Verdränger. Mit anderen Worten kann die Abstützung gegen den Verdränger analog zu Fig. 1 erfolgen, wobei an Stelle des weiteren Abstandshalters das Distanzstück 142-2 tritt. Der Radiallagerinnenring 124-2 kann hierbei eine axial geringere Ausdehnung aufweisen als der Radiallageraußenring 122. Dadurch können der Radiallageraußenring 122 und der Axiallageraußenring 114 in Anlage gebracht werden, und zwischen dem Radiallagerinnenring 124-2 und dem Axiallagerinnenring 112 ein Freiraum für das Distanzstück 142-2 geschaffen werden.

Das Distanzstück 142-2 kann nun eingepasst werden, und so ein definiertes Axialspiel in der Lageranordnung 100-2 erreicht werden. Das Distanzstück 142-1 kann auch in Abhängigkeit von Toleranzen, etwa bei der Breite eines Lagerrings, bereits fertig geschliffen werden. So kann unter Umständen ein definierter Überstand oder Rückstand 202 zwischen Radiallagerinnenring 124-2 und Radiallageraußenring 122 erreicht werden, z.B. x mm, wobei die in Fig. 2 vermerkte Größe x ein beliebiger Wert sein kann, mit einer Toleranz von 30-40 µm.

Das Distanzstück 142-2 weist ferner einen kegeligen Außendurchmesser auf . Ein mögliches Ausführungsbeispiel ist in Fig. 2 gezeigt. Anders ausgedrückt ist ein radiallagerseitiger Außenradius 204, im Rahmen von etwaigen Fertigungstoleranzen, so groß wie ein Laufflächenradius 206 des Radiallagerinnenrings 124-2, und außerdem größer als ein axiallagerseitiger Außenradius 208. Durch ein solches Zuschneiden des Außenradius' des Distanzstücks 142-2 kann eine sogenannte Einfädelschräge geschaffen werden. So kann erreicht werden, dass z.B. das Distanzstück 142-2 und der Radiallagerinnenring 124-2 auf der Welle 134 vormontiert, und dann in den Radiallageraußenring 122 mit den zylindrischen Wälzkörpern 126 eingeführt werden können. Die Einfädelschräge kann dabei das Risiko eines Verkantens der zylindrischen Wälzkörper 126 beim Einführen reduzieren.

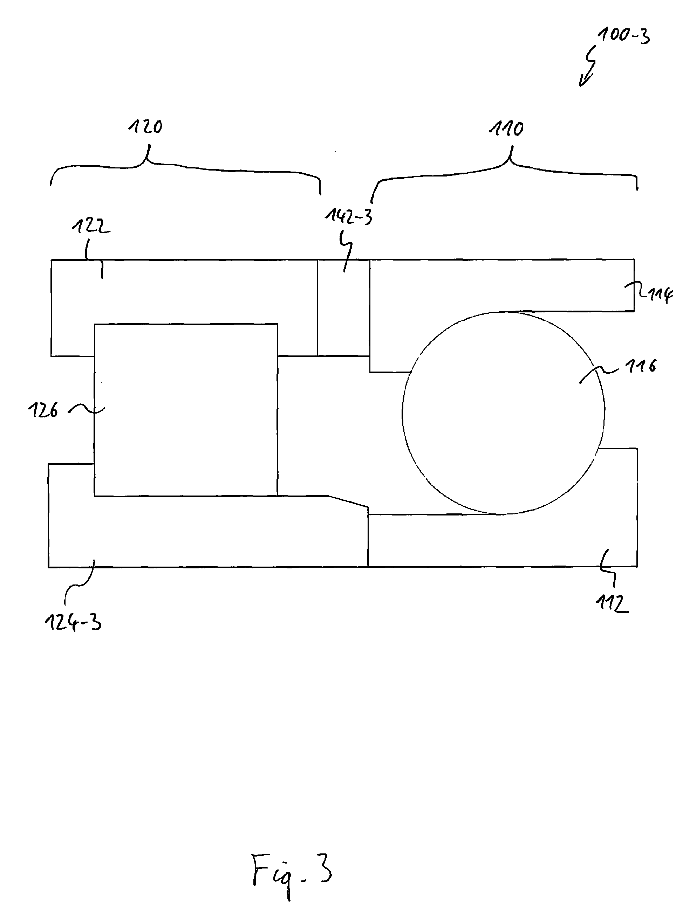

Fig. 3 zeigt ein drittes Ausführungsbeispiel zur Veranschaulichung einer noch weiteren Variante einer Lageranordnung 100-3. Die gezeigten Komponenten entsprechen im Wesentlichen denen in Fig. 1. Im Unterschied zu Fig. 1 wird in Fig. 3 ein breiterer Radiallagerinnenring 124-3 verwendet, sodass der weitere Abstandshalter entfallen kann. Die Abstützung der einzelnen Komponenten gegen den Verdränger und gegen das Gehäuse entspricht darüber hinaus der in Fig. 1 bereits beschriebenen. Die axiale Ausdehnung des Radiallagerrings 124-3 ist dabei mindestens so groß oder auch größer als eine Summe aus der axialen Ausdehnung des Radiallageraußenrings 122 und des Distanzstücks 142-3. Dadurch können der Radiallagerinnenring 124-3 und der Axiallagerinnenring 112 in Anlage gebracht werden, und zwischen dem Radiallageraußenring 122 und dem Axiallageraußenring 114 ein Abstand für das Distanzstück 142-3 geschaffen werden. Der Abstand zwischen dem Radiallageraußenring 122 und dem Axiallageraußenring 114 kann individuell vermessen, und das Distanzstück 142-3 in axialer Richtung entsprechend abgeschliffen werden. Durch individuelle Anpassung des Distanzstücks 142-3 wird in Fig. 3, analog zu Fig.1, das gewünschte Axialspiel erreicht.

Als Radiallagerinnenring 124-3 kann beispielsweise ein Innenring eines serienmäßigen Lagers verwendet werden, das eine höhere axiale Breite aufweist als das Radiallager 120. Dadurch kann ein weiterer Abstandshalter zwischen dem Radiallagerinnenring 124-3 und dem Axiallagerinnenring 112 entfallen.

Bei einem weiteren Ausführungsbeispiel kann ein spezieller Radiallagerinnenring 124-3 verwendet werden, welcher eine um ca. 1 mm höhere Breite aufweist als z.B. ein serienmäßiger, zu dem Radiallager 120 gehöriger Innenring. Hierdurch kann Bauraum bei einer Gesamtlänge der Verdrängerpumpe eingespart werden. Beispielsweise kann eine Lageranordnung 100-3 mit einem Radiallager 120 und einem Axiallager 110 eine axiale Gesamtlänge von ca. 15 mm aufweisen. Das Distanzstück 142-3 kann, entsprechend dem ersten, zweiten und dritten Ausführungsbeispiel abgeschliffen werden. Alternativ können aber auch eine vorgefertigte Abstandsscheibe oder ein Abstandsblech mit einer vordefinierten Stärke verwendet werden.

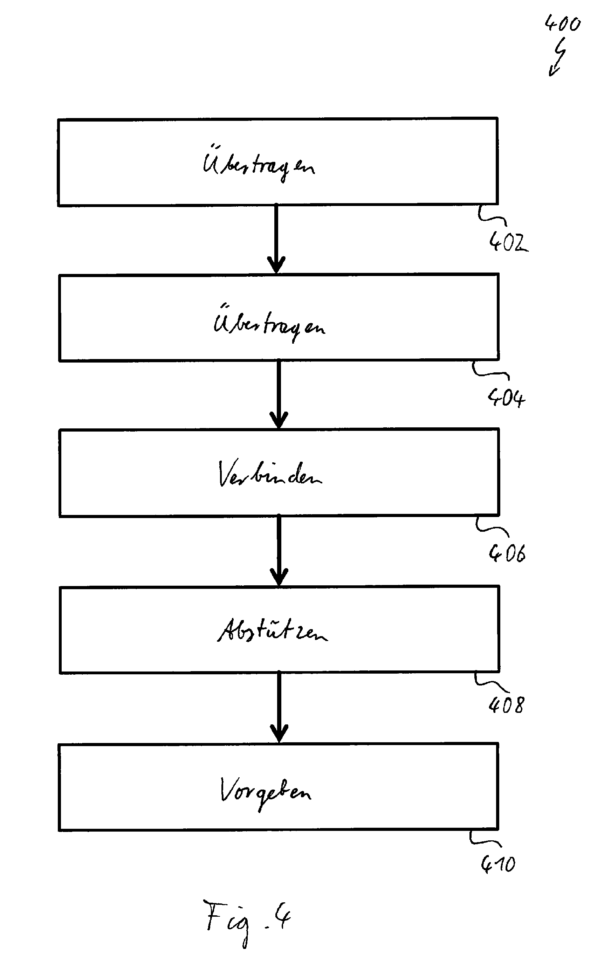

Fig. 4 zeigt ein Flussdiagramm eines Verfahrens 400 zum Lagern eines Verdrängers einer Verdrängerpumpe bezüglich eines Gehäuses. Das Verfahren umfasst ein Übertragen 402 einer Kraft in einer axialen Richtung durch ein erstes Lager. Außerdem umfasst das Verfahren 400 ein Übertragen 404 einer Kraft in einer radialen Richtung durch ein in der axialen Richtung zwischen dem ersten Lager und dem Gehäuse angeordnetes zweites Lager. Weiterhin umfasst das Verfahren 400 ein Verbinden 406 eines ersten Lagerrings des ersten Lagers mit einer mit dem Verdränger verbundenen Welle. Dies geschieht derart, dass ein axialer erster Abstand zwischen dem ersten Lagerring des ersten Lagers und dem Verdränger festgelegt ist. Dem folgt ein Abstützen 408 des zweiten Lagerrings des ersten Lagers axial gegen einen ersten Lagerring des zweiten Lagers und des ersten Lagerrings des zweiten Lagers axial gegen das Gehäuse. Dies geschieht derart, dass ein axialer zweiter Abstand zwischen dem ersten Lagerring des ersten Lagers und dem Gehäuse festgelegt ist. Es folgt dem wiederum ein Vorgeben 410 einer Differenz des ersten Abstandes und des zweiten Abstandes durch ein Distanzstück zwischen dem ersten und dem zweiten Lager.

Weitere Ausführungsbeispiele können auch bei anderen Pumpsystemen oder noch weiteren Anwendungsgebieten Lösungen bieten, bei denen eine drehbar gelagerte Komponente gegenüber einer statischen Komponente in einem sehr präzise vorgegebenen Abstandsbereich zu montieren ist.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 100-1; 100-2; 100-3: Lageranordnung
- 110: Axiallager
- 112: Axiallagerinnenring
- 114: Axiallageraußenring
- 116: kugelförmiger Wälzkörper
- 120: Radiallager
- 122: Radiallageraußenring
- 124-1; 124-2; 124-3: Radiallagerinnenring
- 126: zylindrischer Wälzkörper
- 130: Gehäuse
- 132: Verdränger
- 134: Welle
- 136: Verdrängerabstand
- 138: Gehäuseabstand
- 140: Differenz
- 142-1; 142-2; 142-3: Distanzstück
- 144: radialer Einzug
- 146: Abstandshalter
- 148: weiterer Abstandshalter
- 150: axiale Kraft
- 202: Überstand/Rückstand
- 204: radiallagerseitiger Außenradius
- 206: Laufflächenradius
- 208: axiallagerseitiger Außenradius
- 400: Verfahren
- 402: Übertragen
- 404: Übertragen
- 406: Verbinden
- 408: Abstützen
- 410: Vorgeben

## Patentansprüche

1. Verdrängerpumpe, umfassend ein Gehäuse (130), einen Verdränger (132) und eine Lageranordnung (100-1; 100-2; 100-3) zum Lagern desVerdrängers (132) bezüglich des Gehäuses (130),
wobei die Lageranordnung (100-1; 100-2; 100-3) ein erstes Lager (110) zum Übertragen einer Kraft in einer axialen Richtung und ein in der axialen Richtung zwischen dem ersten Lager (110) und dem Gehäuse (130) angeordnetes zweites Lager (120) zum Übertragen einer Kraft in einer radialen Richtung umfasst,
wobei ein erster Lagerring des ersten Lagers (112) mit einer mit dem Verdränger (132) verbundenen Welle (134) derart verbunden ist, dass ein maximaler axialer erster Abstand (136) zwischen dem ersten Lagerring des ersten Lagers (112) und dem Verdränger (132) festgelegt ist,
wobei ein zweiter Lagerring des ersten Lagers (114) axial gegen einen ersten Lagerring des zweiten Lagers (122) und der erste Lagerring des zweiten Lagers (122) axial gegen das Gehäuse (130) derart abgestützt sind, dass ein axialer zweiter Abstand (138) zwischen dem ersten Lagerring des ersten Lagers (112) und dem Gehäuse (130) festgelegt ist,
wobei eine Differenz (140) des ersten Abstandes (136) und des zweiten Abstandes (138) durch ein Distanzstück (142-1; 142-2; 142-3) zwischen dem ersten (110) und dem zweiten Lager (120) vorgegeben wird,
**dadurch gekennzeichnet, dass** ein Radius (206) einer Lauffläche des zweiten Lagerrings des zweiten Lagers (124-2) mindestens so groß ist wie ein der Lauffläche zugewandter Außenradius (204) des Distanzstücks (142-2), und der der Lauffläche zugewandte Außenradius (204) des Distanzstücks (142-2) größer ist als ein der Lauffläche abgewandter Außenradius (208) des Distanzstücks (142-2).

2. Verdrängerpumpe gemäß Anspruch 1, wobei der erste Lagerring des ersten Lagers (112) ferner axial gegen einen zweiten Lagerring des zweiten Lagers (124-1; 124-2; 124-3), der zweite Lagerring des zweiten Lagers (124-1; 124-2; 124-3) axial gegen den Verdränger (132) abgestützt sind.

3. Verdrängerpumpe gemäß einem der vorangegangenen Ansprüche, wobei der erste Lagerring des ersten Lagers (112) axial gegen das Distanzstück (142-2), und das Distanzstück (142-2) axial gegen einen zweiten Lagerring des zweiten Lagers (124-2) abgestützt sind, wobei das Distanzstück (142-2) und der zweite Lagerring des zweiten Lagers (124-2) mit der Welle (134) in Anlage stehen.

4. Verdrängerpumpe gemäß Anspruch 1 oder 2, wobei der zweite Lagerring des ersten Lagers (114) axial gegen das Distanzstück (142-1; 142-3), und das Distanzstück (142-1; 142-3) axial gegen den ersten Lagerring des zweiten Lagers (122) abgestützt sind, wobei das Distanzstück (142-1; 142-3) und der erste Lagerring des zweiten Lagers (122) mit dem Gehäuse (130) in Anlage stehen.

5. Verdrängerpumpe gemäß einem der vorangegangenen Ansprüche, wobei der erste Lagerring des ersten Lagers (112) ferner axial gegen einen Abstandshalter (148), und der Abstandshalter (148) axial gegen einen zweiten Lagerring des zweiten Lagers (124-1) abgestützt sind, wobei der weitere Abstandshalter (148), und der zweite Lagerring des zweiten Lagers (124-1) mit der Welle (134) in Anlage stehen.

6. Verdrängerpumpe gemäß einem der Ansprüche 1 bis 5, wobei eine axiale Ausdehnung eines zweiten Lagerrings des zweiten Lagers (124-3) größer ist als eine Summe aus einer axialen Ausdehnung des ersten Lagerrings des zweiten Lagers (122) und einer axialen Ausdehnung des Distanzstücks (142-3).

7. Verdrängerpumpe gemäß einem der vorangegangenen Ansprüche, wobei das erste Lager (110) ein Schrägkugellager und das zweite Lager (120) ein Zylinderrollenlager sind.

8. Verfahren (400) zum Lagern eines Verdrängers einer Verdrängerpumpe bezüglich eines Gehäuses, mit:
Übertragen (402) einer Kraft in einer axialen Richtung durch ein erstes Lager,
Übertragen (404) einer Kraft in einer radialen Richtung durch ein in der axialen Richtung zwischen dem ersten Lager und dem Gehäuse angeordnetes zweites Lager,
Verbinden (406) eines ersten Lagerrings des ersten Lagers mit einer mit dem Verdränger verbundenen Welle derart, dass ein axialer erster Abstand zwischen dem ersten Lagerring des ersten Lagers und dem Verdränger festgelegt ist,
Abstützen (408) eines zweiten Lagerrings des ersten Lagers axial gegen einen ersten Lagerring des zweiten Lagers und des ersten Lagerrings des zweiten Lagers axial gegen das Gehäuse derart, dass ein axialer zweiter Abstand zwischen dem ersten Lagerring des ersten Lagers und dem Gehäuse festgelegt ist,
Vorgeben (410) einer Differenz des ersten Abstandes und des zweiten Abstandes durch ein Distanzstück zwischen dem ersten und dem zweiten Lager.

## Claims

1. Positive displacement pump, comprising a housing (130), a displacer (132) and a bearing arrangement (100-1; 100-2; 100-3) for mounting the displacer (132) with respect to the housing (130), the bearing arrangement (100-1; 100-2; 100-3) comprising a first bearing (110) for transmitting a force in an axial direction and a second bearing (120) which is arranged in the axial direction between the first bearing (110) and the housing (130) for transmitting a force in a radial direction, a first bearing ring of the first bearing (112) being connected to a shaft (134) which is connected to the displacer (132), in such a way that a maximum axial first spacing (136) between the first bearing ring of the first bearing (112) and the displacer (132) is fixed, a second bearing ring of the first bearing (114) being supported axially against a first bearing ring of the second bearing (122), and the first bearing ring of the second bearing (122) being supported axially against the housing (130) in such a way that an axial second spacing (138) between the first bearing ring of the first bearing (112) and the housing (130) is fixed, a difference (140) of the first spacing (136) and the second spacing (138) being predetermined by way of a spacer piece (142-1; 142-2; 142-3) between the first bearing (110) and the second bearing (120), **characterized in that** a radius (206) of a running face of the second bearing ring of the second bearing (124-2) is at least as great as an outer radius (204) of the spacer piece (142-2) which faces the running face, and the outer radius (204) of the spacer piece (142-2) which faces the running face being greater than an outer radius (208) of the spacer piece (142-2) which faces away from the running face.

2. Positive displacement pump according to Claim 1, the first bearing ring of the first bearing (112), furthermore, being supported axially against a second bearing ring of the second bearing (124-1; 124-2; 124-3), and the second bearing ring of the second bearing (124-1; 124-2; 124-3) being supported axially against the displacer (132).

3. Positive displacement pump according to either of the preceding claims, the first bearing ring of the first bearing (112) being supported axially against the spacer piece (142-2), and the spacer piece (142-2) being supported axially against the second bearing ring of the second bearing (124-2), the spacer piece (142-2) and the second bearing ring of the second bearing (124-2) being in contact with the shaft (134).

4. Positive displacement pump according to Claim 1 or 2, the second bearing ring of the first bearing (114) being supported axially against the spacer piece (142-1; 142-3), and the spacer piece (142-1; 142-3) being supported axially against the first bearing ring of the second bearing (122), the spacer piece (142-1; 142-3) and the first bearing ring of the second bearing (122) being in contact with the housing (130).

5. Positive displacement pump according to one of the preceding claims, the first bearing ring of the first bearing (112), furthermore, being supported axially against a spacer element (148), and the spacer element (148) being supported axially against a second bearing ring of the second bearing (124-1), the further spacer element (148) and the second bearing ring of the second bearing (124-1) being in contact with the shaft (134).

6. Positive displacement pump according to one of Claims 1 to 5, an axial extent of a second bearing ring of the second bearing (124-3) being greater than a sum of an axial extent of the first bearing ring of the second bearing (122) and an axial extent of the spacer piece (142-3).

7. Positive displacement pump according to one of the preceding claims, the first bearing (110) being an angular contact ball bearing and the second bearing (120) being a cylindrical roller bearing.

8. Method (400) for mounting a displacer of a positive displacer pump with respect to a housing, by way of:
transmitting (402) of a force in an axial direction through a first bearing,
transmitting (404) of a force in a radial direction through a second bearing which is arranged in the axial direction between the first bearing and the housing,
connecting (406) of a first bearing ring of the first bearing to a shaft which is connected to the displacer, in such a way that an axial first spacing between the first bearing ring of the first bearing and the displacer is fixed,
supporting (408) of a second bearing ring of the first bearing axially against a first bearing ring of the second bearing and of the first bearing ring of the second bearing axially against the housing in such a way that an axial second spacing between the first bearing ring of the first bearing and the housing is fixed,
predefining (410) of a difference of the first spacing and the second spacing by way of a spacer piece between the first and the second bearing.

## Revendications

1. Pompe volumétrique, comprenant un boîtier (130), un organe de déplacement (132) et un agencement de palier (100-1 ; 100-2 ; 100-3) pour supporter l'organe de déplacement (132) par rapport au boîtier (130),
l'agencement de palier (100-1 ; 100-2 ; 100-3) comprenant un premier palier (110) pour transférer une force dans une direction axiale et un deuxième palier (120) disposé dans la direction axiale entre le premier palier (110) et le boîtier (130) pour transférer une force dans une direction radiale,
une première bague de palier du premier palier (112) étant connectée à un arbre (134) connecté à l'organe de déplacement (132) de telle sorte qu'une première distance axiale maximale (136) entre la première bague de palier du premier palier (112) et l'organe de déplacement (132) soit fixée,
une deuxième bague de palier du premier palier (114) étant supportée axialement contre une première bague de palier du deuxième palier (122) et la première bague de palier du deuxième palier (122) étant supportée axialement contre le boîtier (130) de telle sorte qu'une deuxième distance axiale (138) entre la première bague de palier du premier palier (112) et le boîtier (130) soit fixée,
une différence (140) entre la première distance (136) et la deuxième distance (138) étant prédéfinie par un élément d'espacement (142-1 ; 142-2 ; 142-3) entre le premier (110) et le deuxième (120) palier,
**caractérisée en ce**
**qu'**un rayon (206) d'une surface de roulement de la deuxième bague de palier du deuxième palier (124-2) est au moins aussi grand qu'un rayon extérieur (204), tourné vers la surface de roulement, de l'élément d'espacement (142-2), et le rayon extérieur (204), tourné vers la surface de roulement, de l'élément d'espacement (142-2) est supérieur à un rayon extérieur (208), détourné de la surface de roulement, de l'élément d'espacement (142-2).

2. Pompe volumétrique selon la revendication 1, dans laquelle la première bague de palier du premier palier (112) est en outre supportée axialement contre une deuxième bague de palier du deuxième palier (124-1 ; 124-2 ; 124-3), et la deuxième bague de palier du deuxième palier (124-1 ; 124-2 ; 124-3) est supportée axialement contre l'organe de déplacement (132).

3. Pompe volumétrique selon l'une quelconque des revendications précédentes, dans laquelle la première bague de palier du premier palier (112) est supportée axialement contre l'élément d'espacement (142-2), et l'élément d'espacement (142-2) est supporté axialement contre une deuxième bague de palier du deuxième palier (124-2), l'élément d'espacement (142-2) et la deuxième bague de palier du deuxième palier (124-2) étant en appui avec l'arbre (134).

4. Pompe volumétrique selon la revendication 1 ou 2, dans laquelle la deuxième bague de palier du premier palier (114) est supportée axialement contre l'élément d'espacement (142-1 ; 142-3), et l'élément d'espacement (142-1 ; 142-3) est supporté axialement contre la première bague de palier du deuxième palier (122), l'élément d'espacement (142-1 ; 142-3) et la première bague de palier du deuxième palier (122) étant en appui avec le boîtier (130).

5. Pompe volumétrique selon l'une quelconque des revendications précédentes, dans laquelle la première bague de palier du premier palier (112) est en outre supportée axialement contre une entretoise (148) et l'entretoise est supportée axialement contre une deuxième bague de palier du deuxième palier (124-1), l'entretoise supplémentaire (148) et la deuxième bague de palier du deuxième palier (124-1) étant en appui avec l'arbre (134).

6. Pompe volumétrique selon l'une quelconque des revendications 1 à 5, dans laquelle une étendue axiale d'une deuxième bague de palier du deuxième palier (124-3) est supérieure à une somme d'une étendue axiale de la première bague de palier du deuxième palier (122) et d'une étendue axiale de l'élément d'espacement (142-3).

7. Pompe volumétrique selon l'une quelconque des revendications précédentes, dans laquelle le premier palier (110) est un roulement à billes à contact oblique et le deuxième palier (120) est un palier à rouleaux cylindriques.

8. Procédé (400) pour supporter un organe de déplacement d'une pompe volumétrique par rapport à un boîtier, comprenant :
le transfert (402) d'une force dans une direction axiale par le biais d'un premier palier,
le transfert (404) d'une force dans une direction radiale par le biais d'un deuxième palier disposé dans la direction axiale entre le premier palier et le boîtier,
la connexion (406) d'une première bague de palier du premier palier à un arbre connecté à l'organe de déplacement de telle sorte qu'une première distance axiale entre la première bague de palier du premier palier et l'organe de déplacement soit fixée,
le support (408) d'une deuxième bague de palier du premier palier axialement contre une première bague de palier du deuxième palier et de la première bague de palier du deuxième palier axialement contre le boîtier de telle sorte qu'une deuxième distance axiale entre la première bague de palier du premier palier et le boîtier soit fixée,
la prédéfinition (410) d'une différence entre la première distance et la deuxième distance par un élément d'espacement entre le premier et le deuxième palier.
